# EUROPEAN PATENT SPECIFICATION

(11) **EP 3 831 183 B1**
(45) Date of publication and mention of the grant of the patent: **20.08.2025**
(21) Application number: 20211395.7
(22) Date of filing: 03.12.2020
(51) Int. Cl.: A01D 34/74

(54) **ROBOTIC LAWN MOWER**
ROBOTERRASENMÄHER
TONDEUSE À GAZON ROBOTISÉE

(30) Priority: 07.12.2019 CN 201911245936; 30.11.2020 CN 202011370802
(43) Date of publication of application: 09.06.2021
(73) Proprietor: Nanjing Chervon Industry Co., Ltd., Nanjing, Jiangsu 211106 (CN)
(72) Inventor: XU, Haishen, Nanjing, Jiangsu 211106 (CN)
(74) Representative: Sun, Yiming

(56) References cited:
- EP-A1- 0 531 071
- EP-A1- 2 625 947
- WO-A1-2019/163120
- GB-A- 2 405 307

## Description

### TECHNICAL FIELD

The present invention relates to garden tools, in particular to a lawn mower and a robotic lawn mower.

Specifically, the invention relates to a robotic lawn mower of the generic type defined in the generic part of claim 1 attached.

### BACKGROUND

Document WO 2019/163120 A1 discloses a robotic lawn mower of the generic type as defined above. Specifically, this document discloses a work machine embodied as a lawn mower and comprising: a power unit; a work unit embodied as a mowing member driven by the power unit; an ejection passageway for ejecting an object to be worked upon that has been acquired by rotation of the work unit; and a control unit which controls the power unit. The work unit may be elevated relative to the work machine by an elevating device.

A lawn mower is one of commonly used garden tools, which is mainly used for mowing all kinds of lawns. With the improvement of people's requirements for greening level and the progress of science and technology, the technological content of the lawn mower is constantly improved, and it is developing towards a direction of being more intelligent and environmentally friendly. Compared with a traditional lawn mower, robotic lawn mowers can run autonomously and complete mowing according to a planned path, which can save a lot of labor, reduce the cost of lawn maintenance and improve labor efficiency. Moreover, they use electric energy and scientifically plan a path, thereby reducing repetitive work and saving energy.

At present, most robotic lawn mowers can usually move the height of their mowing systems up and down in order to achieve different mowing heights. However, structures of an adjusting mechanism and components adjusted by the adjusting mechanism of the mowing systems are relatively complex, the stability of the robotic lawn mowers is poor, and the structures are complex, and the stability is poor during adjusting.

### SUMMARY

According to the invention there is provided a robotic lawn mower defined in claim 1 attached. Preferred embodiments of the invention are defined in dependent claims attached.

### BRIEF DESCRIPTION OF DRAWINGS

FIG. 1 is a schematic view of a lawn mower according to a first example of the invention;
FIG. 2 is a schematic view of a mowing system of the lawn mower of FIG. 1;
FIG. 3 is a matching schematic view of a driving shaft and a mounting shaft of FIG. 2;
FIG. 4 is a schematic view of a mowing system of a lawn mower according to a second example not according to the invention but useful for explanation;
FIG. 5 is a schematic view of a mowing system of a lawn mower according to a third example not according to the invention but useful for explanation.

### DETAILED DESCRIPTION

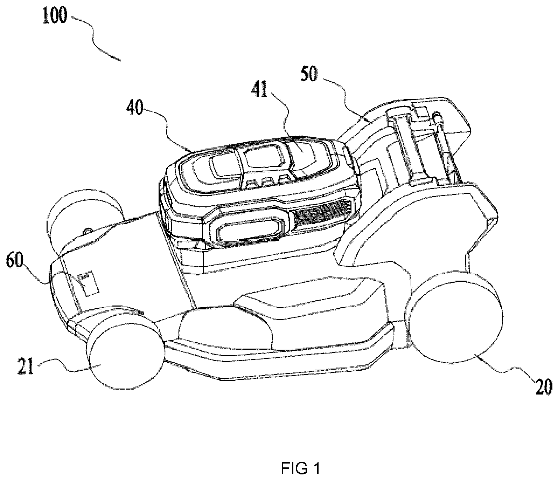

A lawn mower 100 of a first example shown in FIG. 1 is used to mow vegetation such as lawns and weeds. In this example, the lawn mower 100 is a robotic lawn mower that does not need to be pushed by a user, and the robotic lawn mower can automatically mow the lawns without being operating by the user. The lawn mower can also be a push-type lawn mower. For the push-type lawn mower, the user usually stands behind the push-type lawn mower, and the user pushes a handle of the push-type lawn mower to push it to walk on a ground. Alternatively, the lawn mower may also be a riding lawn mower. For the riding lawn mower, the user rides on a seat of the riding lawn mower to operate it to walk on the ground.

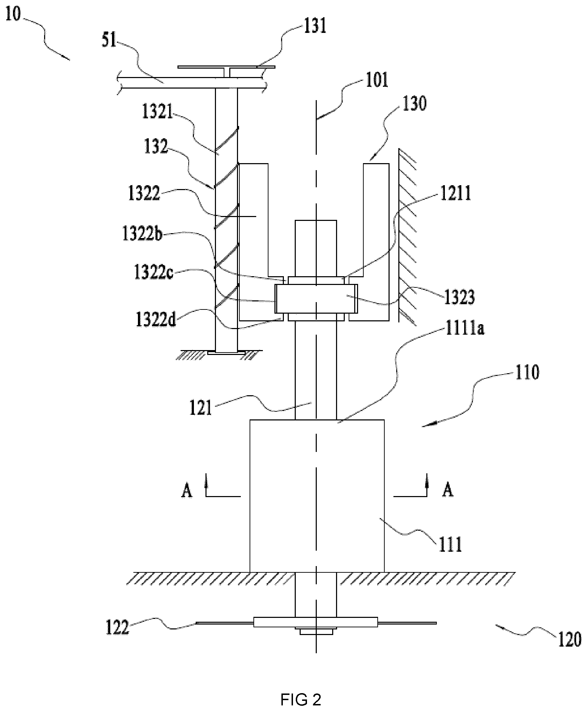

As shown in FIGS. 1 and 2, the lawn mower 100 includes a mowing system 10, a working assembly 20, a control assembly, an energy source device 40 and a housing 50. The mowing system 10 is used to implement a mowing function of the lawn mower 100. The working assembly 20 includes a working wheel 21 for driving the lawn mower 100 to walk on the ground. The control assembly is used to control electrical equipment in the lawn mower 100 to display intelligent performances of the lawn mower 100. The energy source device 40 is used to provide energy source for the mowing system 10, the working assembly 20, and the control assembly. In this example, the energy source device 40 is a power source device, and the power source device may include a battery pack 41 installed to the housing 50. The housing 50 is used to support the mowing system 10, the control assembly and the energy source device 40. The walking assembly 20 is installed to the housing 50 and supports the housing 50.

The mowing system 10 includes a driving mechanism 110, a cutting assembly 120, and a height adjusting mechanism 130. The driving mechanism 110 includes a prime mover for outputting power. The cutting assembly 120 includes a mounting shaft 121 and a mowing member 122. The mounting shaft 121 is used to drive the mowing member 122 to rotate about a first axis 101 to realize the mowing function. The mowing member 122 may be a blade for cutting grass. The height adjusting mechanism 130 can adjust the height of the mowing member 122 relative to the housing 50 in the first axis 101, so that the lawn mower 100 has different cutting heights. For example, the height adjusting mechanism 130 can adjust the cutting assembly 120 to move the mowing member 122 to a first height and a second height. When the mowing member 122 is at the first height, the mowing member 122 is closer to the ground, so that more grass on the ground can be cut. When the mowing member 122 is at the second height, the mowing member 122 is far away from the ground, so that less grass on the ground can be cut.

In this example, the height adjusting mechanism 130 can drive the mounting shaft 121 and the mowing member 122 mounted on the mounting shaft 121 to move up and down along the first axis 101. When the height adjusting mechanism 130 adjusts the mounting shaft 121 to move up and down, a position of the prime mover relative to the housing 50 in the first axis 101 remains fixed. In this way, the height adjusting mechanism 130 drives the cutting assembly 120 to move up and down along the first axis 101, but does not drive the prime mover to move up and down synchronously with the cutting assembly 120, so that a total number of parts driven by the height adjusting mechanism 130 that can move up and down in the first axis 101 synchronously with the mowing member 122 is small. A total weight of the parts is also relatively small, thereby improving the comfort of operating of the height adjusting mechanism 130 and also improving the stability of the height adjusting mechanism 130. A weight of loads driven by the height adjusting mechanism 130 is also relatively small, thereby prolonging the service life of the height adjusting mechanism 130. In addition, the housing 50 is formed with or connected with a mounting structure 51. Because the prime mover does not move up and down with the cutting assembly 120, so that the prime mover can be fixedly installed to the mounting structure 51, thereby improving the reliability of the prime mover and reducing the vibration generated by the prime mover during the operation of the lawn mower 100, thereby prolonging the service life of the lawn mower 100. Furthermore, the mounting shaft 121 and the mowing member 122 can be driven by the height adjusting mechanism 130 at the same time to move up and down in the first axis 101, so that the mowing member 122 is stably mounted to the mounting shaft 121, improving the reliability of the cutting assembly 120. Especially for the robotic lawn mower, the size of the robotic lawn mower is relatively small. If the driving mechanism 110 also moves up and down along with the cutting assembly 120, the robotic lawn mower needs a larger space for the driving mechanism 110 and the cutting assembly 120 to move, which is not conducive to the miniaturization of the robotic lawn mower. In this example, the driving mechanism 110 does not move with the cutting assembly 120, so that the internal structure of the robotic lawn mower is relatively compact, thereby facilitating the miniaturization of the robotic lawn mower.

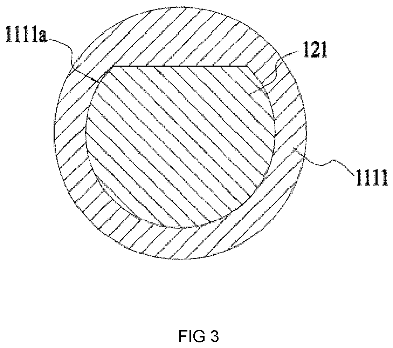

The prime mover includes a driving shaft 1111 for outputting power and the driving shaft 1111 is the prime mover shaft of the prime mover. In this example, the prime mover is an electric motor 111, the electric motor 111 includes a stator assembly and a rotor assembly, the rotor assembly also includes a rotor shaft, and the rotor shaft is the driving shaft 1111 for outputting power of the electric motor 111. When the height adjusting mechanism 130 drives the mounting shaft 121 and the mowing member 122 to move up and down along the first axis 101, the position of the driving shaft 1111 relative to the housing 50 in the first axis 101 remains constant. In the present example, the driving shaft 1111 is arranged along the first axis 101. The driving shaft 1111 is also coaxial with the mounting shaft 121. The driving shaft 1111 is provided with a first mounting hole 1111a extending along the first axis 101, the first mounting hole 1111a penetrates the driving shaft 1111 along the first axis 101, and the mounting shaft 121 is inserted into or passes through the first mounting hole 1111a. When the prime mover is in operation, the driving shaft 1111 can rotate around the first axis 101, and the driving shaft 1111 transmits power to the mounting shaft 121 to drive the mounting shaft 121 to rotate around the first axis 101. The mounting shaft 121 can also slide up and down along the first axis 101 relative to the driving shaft 1111. Specifically, as shown in FIG. 3, the driving shaft 1111 is provided with a driving portion formed on a hole wall of the first mounting hole 1111a, the driving portion drives the mounting shaft 121 to rotate synchronously with the driving shaft 1111, and the driving portion allows the mounting shaft 121 to slide up and down relative to the driving shaft 1111. In this example, the driving portion is directly formed on the hole wall of the mounting hole 1111a and the driving portion is a transmission plane parallel to the first axis 101. It can be understood that in some other examples, a mounting hole of a driving shaft can also be provided with a driving member, the driving member may be a bushing, the bushing is fixedly connected with the driving shaft, and the bushing forms a driving hole, and a hole wall of the driving hole forms a driving portion that can drive a mounting shaft to rotate with the driving shaft, and the mounting shaft passes through the driving hole.

In the present example, the cutting assembly 120 also includes a mounting member for mounting the mowing member 122 to the mounting shaft 121. The mounting member is a disc, the mowing member 122 is a blade mounted on the disc, and the blade also can rotate relative the disc. The disc is fixed to a preset position on the mounting shaft 121 through fasteners, and there is only one preset position. That is to say, the position of the disc relative to the mounting shaft 121 in the first axis 101 is not adjustable, and the position of the disc relative to the mounting shaft 121 in the first axis 101 is fixed. In this way, the disc can be more stably installed to the mounting shaft 121, so as to prevent the disc from loosening relative to the mounting shaft 121.

The height adjusting mechanism 130 includes an operating member and an adjusting assembly 132. The operating member is used for the user to operate to control cutting heights of the cutting assembly 120. In this example, the operating member is a knob 131 that can be turned by the user. The knob 131 may be arranged below the housing 50 or above the housing 50. In other examples, an operating element may also be an operating button. The lawn mower 100 further includes a display screen 60, and the operating member may be a touch button on the display screen 60, and the display screen 60 is a touch screen.

The adjusting assembly 132 includes an adjusting member 1321 and a mounting bracket 1322. The mounting bracket 1322 is composed of two parts. The adjusting member 1321 is connected to the operating member, and the mounting bracket 1322 is used for mounting the mounting shaft 121. When the user operates the knob 131, the adjusting member 1321 adjusts the mounting bracket 1322 to move along the first axis 101 or a direction parallel to the first axis 101, and the mounting bracket 1322 drives a whole of the mounting shaft 121 and the mowing member 122 along the first axis 101, so that the lawn mower 100 has different cutting heights.

The adjusting member 1321 can rotate around a rotation axis, and the adjusting member 1321 and the mounting bracket 1322 form a transmission fit that can convert the rotation of the adjusting member 1321 into a sliding movement of the mounting bracket 1322 along the first axis 101. The transmission fit may be a direct fit between the adjusting member 1321 and the mounting bracket 1322, or an indirect fit in which a switching structure is provided between the adjusting member 1321 and the mounting bracket 1322. Specifically, the adjusting member 1321 is a screw rod. A first thread is formed on the screw rod, and a second thread that matches the first thread is formed on the mounting bracket 1322. The rotation of the mounting bracket 1322 about the first axis 101 is restricted, that is, the mounting bracket 1322 cannot rotate about the first axis 101. In this way, when the adjusting member 1321 rotates with the knob 131, the adjusting member 1321 will drive the mounting bracket 1322 to move along the first axis 101 under the cooperation of the first thread and the second thread. The screw rod is mounted to the mounting structure 51 of the housing 50.

As shown in FIG. 2, the mounting bracket 1322 is formed with a second mounting hole 1322b extending along the first axis 101, and the mounting shaft 121 passes through the second mounting hole 1322b. The second mounting hole 1322b is also recessed along a radial direction perpendicular to the first axis 101 to form a groove 1322c. The adjusting assembly 132 further includes a bearing 1323, the bearing 1323 is installed in the groove 1322c, and the bearing 1323 can move synchronously with the mounting bracket 1322 along the first axis 101. A groove wall of the groove 1322c is formed with a first limiting portion 1322d, and the first limiting portion 1322d can restrict the bearing 1323 from separating from the mounting bracket 1322 along the first axis 101. The bearing 1323 also supports the mounting shaft 121, an inner ring of the bearing 1323 can be fixedly connected to the mounting shaft 121, and an outer ring of the bearing 1323 can be fixedly connected to the groove wall of the groove 1322c. In this example, the inner ring of the bearing 1323 can be interference fit with the mounting shaft 121, and the outer ring of the bearing 1323 can be interference fit with the groove wall of the groove 1322c.

In the present example, the mounting shaft 121 is formed with or connected with a second limiting portion 1211, and the second limiting portion 1211 can limit the bearing 1323 from disengaging from the mounting shaft 121 along the first axis 101. In the present example, the second limiting portion 1211 is a pair of annular protrusions formed on the mounting shaft 121, and the bearing 1323 is arranged between the pair of annular protrusions. In other examples, a second limiting portion may also be a clamp ring provided on a mounting shaft.

The height adjusting mechanism 130 further includes a sliding rail for restricting the rotation of the mounting bracket 1322, and the sliding rail is installed on the housing 50 along a direction parallel to the first axis 101. One side of the mounting bracket 1322 is used as a sliding block to cooperate with the sliding rail. The sliding rail is formed on the housing 50, or the sliding rail is formed of a part fixed relative to the housing 50. The sliding rail limits the rotation of the mounting bracket 1322 around the first axis 101 and allows the mounting bracket to slide along the sliding rail in the first axis 101. One end of the screw rod is fixed relative to the housing 50, the screw rod can only rotate around the axis of the screw rod, and the other end of the screw rod passes through and is fixedly connected with the knob 131, which can drive the screw rod to rotate when the knob 131 rotates.

When the user operates the knob 131, the screw rod follows the knob 131 to rotate. Because the mounting bracket 1322 is matched with the screw rod, and the other side of the mounting bracket 1322 is fitted in the sliding rail and cannot rotate and move horizontally, the mounting bracket 1322 can move up and down along the slid sliding rail under the rotation of the screw rod.

Because the bearing 1323 is fixed on the mounting bracket 1322, the bearing 1323 has a tendency to move up and down following the mounting bracket 1322, and thus has a tendency to move relative to the mounting shaft 121. Since the mounting shaft 121 is provided with a stopper that restricts the relative movement of the bearing 1323 and the mounting shaft 121, the bearing 1323 will drive the mounting shaft 121 to move up and down when the bearing 1323 is driven by the mounting bracket 1322.

The mounting shaft 121 cooperates with the driving shaft 1111 of the driving mechanism 110. But the mounting shaft 121 cannot drive the driving shaft 1111 to move up and down, thus cannot drive the driving mechanism 110 to move up and down.

Therefore, the height adjusting mechanism 130 only adjusts the height of the mounting shaft 121 and does not adjust the height of other components.

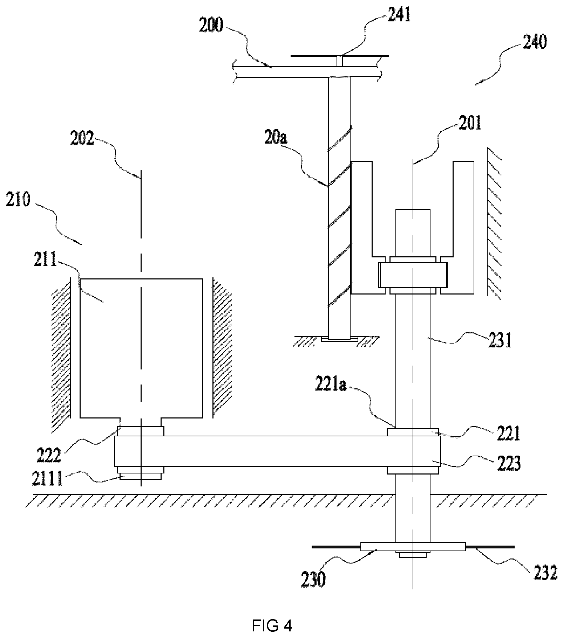

FIG. 4 shows the internal structure of a lawn mower of a second example. In this example, the lawn mower may also be a robotic lawn mower. The lawn mower includes a working assembly, a control assembly, and a power source device which are substantially the same as that in the lawn mower 100 in the first example. The lawn mower of this example further includes a mowing system 20a and a housing for mounting the mowing system 20a, and the housing includes a mounting structure 200. The mowing system 20a includes a cutting assembly 230 and a height adjusting mechanism 240 that are basically the same as that in the lawn mower 100 of the first example. The main difference between this example and the first example is that the mowing system 20a includes a driving mechanism 210 that is different from that in the first example. The driving mechanism 210 includes a prime mover 211 and a transmitting assembly 220 for realizing a power transmission between the prime mover 211 and the cutting assembly. In this example, because the driving mechanism 210 is different from the first example and the driving mechanism 210 is mounted to the housing, the housing also includes another mounting structure 200 for mounting the driving mechanism 210. The following mainly introduces the differences between this example and the first example, and the parts of this example with the same as the first example will not be described in detail.

As shown in FIG. 4, the height adjusting mechanism 240 can adjust a whole of a mounting shaft 231 and a mowing member 232 to move up and down along a first axis 201, so that the lawn mower has different cutting heights.

In this example, the prime mover 211 includes a prime mover shaft 2111 that can rotate about a second axis 202. The transmitting assembly 220 is used to transmit a power output by the prime mover shaft 2111 to the mounting shaft 231.

In this example, the transmitting assembly 220 is mounted to the mounting structure 200 of the housing. The transmitting assembly 220 includes a driving shaft for driving the mounting shaft 231 to rotate, which drives the mounting shaft 231 to rotate synchronously and allows the mounting shaft 231 to move up and down in the first axis 201 relative to it. Here, the driving shaft is considered as a part of the transmitting assembly 220, and the driving shaft is a power output member of the transmitting assembly 220. Of course, it can be considered that the driving shaft is not part of the transmitting assembly 220, but that the transmitting assembly 220 is used to transfer a power between the prime mover 211 and the driving shaft. In this example, the driving shaft is a first driving wheel 221, and the transmitting assembly 220 further includes a second driving wheel 222 and a driving belt 223. The driving belt 223 is a synchronous belt, the first driving wheel 221 and the second driving wheel 222 are synchronous belt wheels, and a torque transmission of the transmitting assembly 220 is constant speed transmission. In other words, the transmitting assembly 220 only transmits a torque without changing the speed, so that the speed of the mounting shaft 231 is the same as that of the prime mover shaft 2111. In other examples, a transmitting assembly can also change the speed transmitted from the prime mover shaft to the mounting shaft so that the speed of the mounting shaft is different from that of the prime mover shaft.

In some other examples, the transmitting assembly may be one or a combination of two or more of belt transmission, rope transmission, friction wheel transmission, gear transmission, chain transmission, screw transmission, or harmonic transmission.

By providing the transmitting assembly 220, the prime mover 211 and the mounting shaft 231 are not arranged on the same axis, an overall size of the driving mechanism 210 and the cutting assembly 230 in a height direction of the housing can be reduced, thereby facilitating the miniaturization of the lawn mower. Moreover, in the present example, the prime mover 211 is a motor, and the transmitting assembly 220 is provided so that the electric motor can be a conventional electric motor in the prior art, which reduces the design and production cost of the motor and can also improve the structural strength and reliability of the motor. Furthermore, the transmitting assembly 220 is provided so that the cutting assembly 230 can be separated from the driving mechanism 210, thereby facilitating maintenance of the driving mechanism 210 and the cutting assembly 230 separately.

Specifically, the second driving wheel 222 is fixedly connected to the prime mover shaft 2111, and the first driving wheel 221 is formed with a driving portion 221a. The driving portion 221a can output torque to the mounting shaft 231 to drive the mounting shaft 231 to rotate synchronously with the first driving wheel 221. The driving portion 221a also allows the mounting shaft 231 to move up and down along the first axis 201. In this way, when the user operates an operating member 241, the height adjusting mechanism 240 can adjust a whole of the mounting shaft 231 and the cutting member 232 to move up and down along the first axis 201 relative to the transmitting assembly 220, thereby enabling the lawn mower to have different cutting heights.

In the present example, the height adjusting mechanism 240 only drives the cutting assembly 230 to move up and down in the first axis 201, while the prime mover 211 and the transmitting assembly 220 are kept constant relative to the housing in the first axis 201. A total number of parts driven by the height adjusting mechanism 240 that can move up and down in the first axis 201 synchronously with the mowing member 232 is small, and a total weight of the parts is also relatively small, thereby improving the comfort of operation of the height adjusting mechanism 240 and improving the stability of the height adjusting mechanism 240. The weight of loads driven by the height adjusting mechanism 240 is also relatively small, thereby prolonging the service life of the height adjusting mechanism 240. In addition, since the prime mover 211 and the transmitting assembly 220 do not move up and down together with the cutting assembly 230, the prime mover 211 and the transmitting assembly 220 can be mounted to the mounting structure 200 of the housing, thereby improving the reliability of the prime mover 211 and the transmitting assembly 220, reducing the vibration generated by the prime mover 211 and the transmitting assembly 220 during the operation of the lawn mower, thereby extending the service life of the lawn mower. Furthermore, the mounting shaft 231 and the mowing member 232 can be driven by the height adjusting mechanism 240 to move up and down in the first axis 201, so that the mowing member 232 is stably mounted to the mounting shaft 231, which improves the reliability of the cutting assembly 230.

**In** the present example, the fit between the first driving wheel 221 and the mounting shaft 231 is clearance fit. When the mounting shaft 231 moves up and down under an external force, because the mounting shaft 231 is in the clearance fit with the first driving wheel 221, the mounting shaft 231 does not drive the first driving wheel 221 and the driving belt 223 matched with the first driving wheel 221 to move up and down, so the prime mover 211 dose not move with the mounting shaft 231 when the mounting shaft 231 moves up and down.

The driving mechanism 210 can be assembled at any position in the housing under a premise of ensuring that the prime mover shaft 2111 can transmit torque to the mounting shaft 231 through the transmitting assembly 220, so that it can also be assembled at a more reasonable position according to the position of a center of gravity of the lawn mower and the arrangement of internal structures.

The second axis 202 on which the prime mover shaft 2111 rotates does not overlap with the first axis 201 on which the mounting shaft 231 rotates.

Preferably, the first axis 201 and the second axis 202 are parallel to each other and spaced apart by a distance. The second axis 202 is parallel to and not coincident with the first axis 201. Alternatively, in some other examples, a second axis and a first axis may be perpendicular to each other, or the second axis may be inclined relative to the first axis.

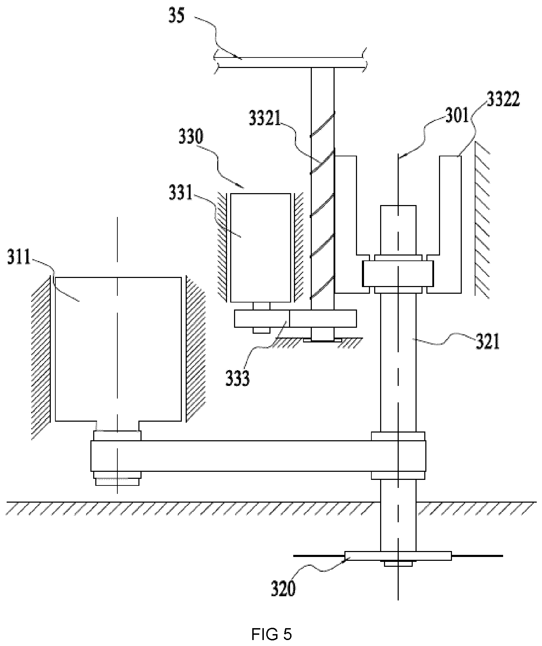

FIG. 5 shows the internal structure of a lawn mower of a third example. In this example, the lawn mower may also be a robotic lawn mower. The structure of the lawn mower is basically the same as that of the lawn mower in the second example. The main difference is that the lawn mower in this example is not used for a user to manually adjust a knob to achieve speed regulation, but a driving motor 331 is provided in an adjusting mechanism 330, the driving motor 331 drives an adjusting member 3321 to rotate through a gear assembly 333, and then the adjusting member 3321 drives a mounting bracket 3322 and a mounting shaft 321 to move up and down along a first axis 301. In this way, an electric adjustment of the cutting height of the cutting assembly 320 can be realized, thereby facilitating the user's operation. Moreover, the driving motor 331 may also be connected with a controller and a detecting device, the detecting device detects load parameters, grass height parameters, etc., and the controller controls the operation of the driving motor 331 according to a detection result of the detection device to adjust the cutting assembly 320 to a corresponding cutting height. Alternatively, in other examples, a driving motor 331 can also be connected to a control panel, and the user can input a cutting height on the control panel, and then the driving motor 331 operates to adjust the cutting assembly 320 to a corresponding cutting height. In this example, the driving motor 331 and a prime mover are both arranged in a housing 35.

## Claims

1. A robotic lawn mower (100), comprising:
a mowing system (10) for mowing grass;
a housing (50) configured to support the mowing system (10);
a working assembly (20) comprising a working wheel (21) configured to support the housing (50) to drive the robotic lawn mower (100) to walk on a ground; and
an energy source device (40) used to provide energy source;
wherein the mowing system (10) comprises:
a cutting assembly (120) comprising a mowing member (122) for cutting the grass and a mounting shaft (121) for mounting the mowing member (122), wherein the mounting shaft (121) is capable of rotating about a first axis (101) relative to the housing (50);
a driving mechanism (110) comprising an electric motor (111), the electric motor (111) comprising a stator assembly and a rotor assembly, the rotor assembly comprising a driving shaft (1111) for driving the cutting assembly (120) to rotate; and
a height adjusting mechanism (130) for adjusting the movement of the cutting assembly (120) along the first axis (101) to achieve different cutting heights of the mowing member (122), **characterized in that**
the driving shaft (1111) is provided with a mounting hole (1111a) and the mounting shaft (121) passes through the mounting hole (1111a);
the driving shaft (1111) is formed with a driving portion for driving the mounting shaft (121) to rotate synchronously with the driving shaft (1111) and the driving portion allows the mounting shaft (121) to move relative to the driving shaft (1111) along the first axis (101); and
when the height adjusting mechanism (130) adjusts the cutting assembly (120) to move along the first axis (101), the mounting shaft (121) moves relative to the driving shaft (1111) along the first axis (101).

2. The robotic lawn mower (100) of claim 1, wherein when the height adjusting mechanism (130) drives the cutting assembly (120) to move along the first axis (101), the position of the driving shaft (1111) relative to the housing (50) in the first axis (101) remains constant.

3. The robotic lawn mower (100) of claim 1, wherein the driving portion is formed on a hole wall of the mounting hole (1111a).

4. The robotic lawn mower (100) of claim 1, wherein the height adjusting mechanism (130) comprises an operating member for a user to operate, an adjusting assembly comprising an adjusting member and a mounting bracket for mounting the mounting shaft, and when the operating member is operated by the user, the adjusting member drives the mounting bracket to move along the first axis (101).

5. The robotic lawn mower (100) of claim 4, wherein the adjusting member is capable of rotating about a rotation axis relative to the housing (50), and the adjusting member and the mounting bracket form a transmission fit that can convert the rotation of the adjusting member into a sliding movement of the mounting bracket along the first axis (101).

6. The robotic lawn mower (100) of claim 1, wherein when the height adjusting mechanism (130) adjusts the cutting assembly (120) to move along the first axis (101), the electric motor (111) remains fixed relative to the housing (50) along the first axis (101).

7. The robotic lawn mower (100) of claim 1, wherein when the height adjusting mechanism (130) adjusts the cutting assembly (120) to move along the first axis (101), the mounting shaft (121) moves relative to the electric motor (111) along the first axis (101).

8. The robotic lawn mower (100) of claim 1, wherein the height adjusting mechanism (130) further comprises a driving motor (331) for driving the mounting shaft (121) to move along the first axis (101).

9. The robotic lawn mower (100) of claim 8, wherein the electric motor (111) and the driving motor (331) are arranged in the housing (50).

## Patentansprüche

1. Ein Rasenmähroboter (100), umfassend:
ein Mähsystem (10) zum Mähen von Gras;
ein Gehäuse (50), das eingerichtet ist, das Mähsystem (10) zu tragen;
eine Arbeitsanordnung (20), umfassend ein Arbeitsrad (21), das eingerichtet ist, das Gehäuse (50) zu tragen, um den Rasenmähroboter (100) auf einem Boden zu bewegen; und
eine Energiequellenvorrichtung (40), die dazu dient, eine Energiequelle bereitzustellen;
wobei das Mähsystem (10) Folgendes umfasst:
eine Schneidanordnung (120), umfassend ein Mähelement (122) zum Schneiden des Grases und eine Montagewelle (121) zur Montage des Mähelements (122), wobei die Montagewelle (121) relativ zum Gehäuse (50) um eine erste Achse (101) drehbar ist;
einen Antriebsmechanismus (110), umfassend einen Elektromotor (111), wobei der Elektromotor (111) eine Statoranordnung und eine Rotoranordnung umfasst, wobei die Rotoranordnung eine Antriebswelle (1111) zum Antreiben der Schneidanordnung (120) zur Rotation umfasst; und
einen Höheneinstellmechanismus (130) zur Einstellung der Bewegung der Schneidanordnung (120) entlang der ersten Achse (101), um unterschiedliche Schnitthöhen des Mähelements (122) zu erreichen, **dadurch gekennzeichnet, dass**
die Antriebswelle (1111) mit einer Montagelochung (1111a) versehen ist und die Montagewelle (121) durch die Montagelochung (1111a) hindurch verläuft;
die Antriebswelle (1111) mit einem Antriebsteil ausgebildet ist, um die Montagewelle (121) zum Synchrondrehen mit der Antriebswelle (1111) anzutreiben, wobei das Antriebsteil es ermöglicht, dass sich die Montagewelle (121) relativ zur Antriebswelle (1111) entlang der ersten Achse (101) bewegt; und
wenn der Höheneinstellmechanismus (130) die Schneidanordnung (120) zur Bewegung entlang der ersten Achse (101) einstellt, sich die Montagewelle (121) relativ zur Antriebswelle (1111) entlang der ersten Achse (101) bewegt.

2. Der Rasenmähroboter (100) nach Anspruch 1, wobei, wenn der Höheneinstellmechanismus (130) die Schneidanordnung (120) zur Bewegung entlang der ersten Achse (101) antreibt, die Position der Antriebswelle (1111) relativ zum Gehäuse (50) in der ersten Achse (101) konstant bleibt.

3. Der Rasenmähroboter (100) nach Anspruch 1, wobei das Antriebsteil an einer Lochwand der Montagelochung (1111a) ausgebildet ist.

4. Der Rasenmähroboter (100) nach Anspruch 1, wobei der Höheneinstellmechanismus (130) ein Betätigungselement zum Bedienen durch einen Benutzer umfasst, eine Einstellanordnung umfassend ein Einstellelement und eine Montagehalterung zur Montage der Montagewelle, und wenn das Betätigungselement durch den Benutzer betätigt wird, das Einstellelement die Montagehalterung zur Bewegung entlang der ersten Achse (101) antreibt.

5. Der Rasenmähroboter (100) nach Anspruch 4, wobei das Einstellelement relativ zum Gehäuse (50) um eine Rotationsachse drehbar ist und das Einstellelement und die Montagehalterung eine Übertragungsanpassung bilden, die die Rotation des Einstellelements in eine Gleitbewegung der Montagehalterung entlang der ersten Achse (101) umwandeln kann.

6. Der Rasenmähroboter (100) nach Anspruch 1, wobei, wenn der Höheneinstellmechanismus (130) die Schneidanordnung (120) zur Bewegung entlang der ersten Achse (101) einstellt, der Elektromotor (111) relativ zum Gehäuse (50) entlang der ersten Achse (101) fest bleibt.

7. Der Rasenmähroboter (100) nach Anspruch 1, wobei, wenn der Höheneinstellmechanismus (130) die Schneidanordnung (120) zur Bewegung entlang der ersten Achse (101) einstellt, sich die Montagewelle (121) relativ zum Elektromotor (111) entlang der ersten Achse (101) bewegt.

8. Der Rasenmähroboter (100) nach Anspruch 1, wobei der Höheneinstellmechanismus (130) ferner einen Antriebsmotor (331) umfasst, der dazu dient, die Montagewelle (121) entlang der ersten Achse (101) zu bewegen.

9. Der Rasenmähroboter (100) nach Anspruch 8, wobei der Elektromotor (111) und der Antriebsmotor (331) im Gehäuse (50) angeordnet sind.

## Revendications

1. Tondeuse à gazon robotisée (100), comprenant :
un système de tonte (10) pour tondre l'herbe ;
un boîtier (50) conçu pour supporter le système de tonte (10) ;
un ensemble de travail (20) comprenant une roue de travail (21) conçue pour supporter le boîtier (50) afin de faire se déplacer la tondeuse à gazon robotisée (100) sur un sol ; et
un dispositif de source d'énergie (40) utilisé pour fournir une source d'énergie ;
le système de tonte (10) comprenant :
un ensemble de coupe (120) comprenant un organe de coupe (122) pour couper l'herbe et un arbre de montage (121) pour monter l'organe de coupe (122), l'arbre de montage (121) étant apte à tourner autour d'un premier axe (101) par rapport au boîtier (50) ;
un mécanisme d'entraînement (110) comprenant un moteur électrique (111), le moteur électrique (111) comprenant un ensemble statorique et un ensemble rotorique, l'ensemble rotorique comprenant un arbre d'entraînement (1111) pour entraîner l'ensemble de coupe (120) en rotation ; et
un mécanisme de réglage de hauteur (130) pour ajuster le mouvement de l'ensemble de coupe (120) le long du premier axe (101) afin d'obtenir différentes hauteurs de coupe de l'organe de coupe (122), **caractérisé en ce que**
l'arbre d'entraînement (1111) est pourvu d'un trou de montage (1111a) et l'arbre de montage (121) traverse le trou de montage (1111a) ;
l'arbre d'entraînement (1111) est formé avec une portion d'entraînement pour entraîner l'arbre de montage (121) en rotation synchrone avec l'arbre d'entraînement (1111), et la portion d'entraînement permet à l'arbre de montage (121) de se déplacer par rapport à l'arbre d'entraînement (1111) le long du premier axe (101) ; et
lorsque le mécanisme de réglage de hauteur (130) ajuste l'ensemble de coupe (120) pour se déplacer le long du premier axe (101), l'arbre de montage (121) se déplace par rapport à l'arbre d'entraînement (1111) le long du premier axe (101).

2. Tondeuse à gazon robotisée (100) selon la revendication 1, dans laquelle, lorsque le mécanisme de réglage de hauteur (130) entraîne l'ensemble de coupe (120) à se déplacer le long du premier axe (101), la position de l'arbre d'entraînement (1111) par rapport au boîtier (50) dans le premier axe (101) reste constante.

3. Tondeuse à gazon robotisée (100) selon la revendication 1, dans laquelle la portion d'entraînement est formée sur une paroi du trou de montage (1111a).

4. Tondeuse à gazon robotisée (100) selon la revendication 1, dans laquelle le mécanisme de réglage de hauteur (130) comprend un organe de commande pour être actionné par un utilisateur, un ensemble de réglage comprenant un organe de réglage et un support de montage pour monter l'arbre de montage, et lorsque l'organe de commande est actionné par l'utilisateur, l'organe de réglage entraîne le support de montage à se déplacer le long du premier axe (101).

5. Tondeuse à gazon robotisée (100) selon la revendication 4, dans laquelle l'organe de réglage est apte à tourner autour d'un axe de rotation par rapport au boîtier (50), et l'organe de réglage et le support de montage forment un ajustement de transmission capable de convertir la rotation de l'organe de réglage en un mouvement coulissant du support de montage le long du premier axe (101).

6. Tondeuse à gazon robotisée (100) selon la revendication 1, dans laquelle, lorsque le mécanisme de réglage de hauteur (130) ajuste l'ensemble de coupe (120) à se déplacer le long du premier axe (101), le moteur électrique (111) reste fixe par rapport au boîtier (50) le long du premier axe (101).

7. Tondeuse à gazon robotisée (100) selon la revendication 1, dans laquelle, lorsque le mécanisme de réglage de hauteur (130) ajuste l'ensemble de coupe (120) à se déplacer le long du premier axe (101), l'arbre de montage (121) se déplace par rapport au moteur électrique (111) le long du premier axe (101).

8. Tondeuse à gazon robotisée (100) selon la revendication 1, dans laquelle le mécanisme de réglage de hauteur (130) comprend en outre un moteur d'entraînement (331) pour entraîner l'arbre de montage (121) à se déplacer le long du premier axe (101).

9. Tondeuse à gazon robotisée (100) selon la revendication 8, dans laquelle le moteur électrique (111) et le moteur d'entraînement (331) sont agencés dans le boîtier (50).
